# EUROPEAN PATENT SPECIFICATION

(11) **EP 3 365 828 B1**
(45) Date of publication and mention of the grant of the patent: **04.05.2022**
(21) Application number: 16742068.6
(22) Date of filing: 21.06.2016
(51) Int. Cl.: G06F 21/55, H04L 29/06, G06F 21/60

(54) **METHODS FOR DATA LOSS PREVENTION FROM MALICIOUS APPLICATIONS AND TARGETED PERSISTENT THREATS**
VERFAHREN ZUR DATENVERLUSTVERHÜTUNG DURCH BÖSARTIGE ANWENDUNGEN UND GEZIELTE PERSISTENTE BEDROHUNGEN
PROCÉDÉS POUR PRÉVENIR DES PERTES DE DONNÉES DU FAIT D'APPLICATIONS MALVEILLANTES ET DE MENACES PERSISTANTES CIBLÉES

(30) Priority: 30.09.2015 IN 5220CH2015; 20.11.2015 US 201514947360
(43) Date of publication of application: 29.08.2018
(73) Proprietor: CA, Inc., San Jose, CA 95131 (US)
(72) Inventor: SARIN, Sumit Manmohan, Pune 411045 (IN); JAISWAL, Sumesh, Pune 411006 (IN); CHATURVEDI, Bishnu, Pune 411027 (IN)
(74) Representative: Dilg, Haeusler, Schindelmann Patentanwaltsgesellschaft mbH
(86) International application number: PCT/US2016/038509
(87) International publication number: WO 2017/058314

(56) References cited:
- US-A1- 2012 291 087
- US-A1- 2013 247 201
- US-B1- 8 832 780
- US-B1- 8 943 546
- US-B1- 9 003 475

## Description

### BACKGROUND

### Field

Embodiments presented herein generally relate to data loss prevention systems, and more specifically, to using reputation information about applications, libraries, and source and destination points for network traffic to monitor for and prevent potential data loss events from malicious applications and targeted threats (advanced persistent threats).

### Description of the Related Art

Data loss prevention (DLP) systems protect sensitive data from disclosure or misuse. To do so, DLP systems may monitor when content is used on an endpoint system or when applications attempt to transmit data outside of a network. For example, DLP systems may prevent personally identifiable information, such as Social Security numbers, bank account numbers, payment card information, and so on from being transmitted outside of a network (*e.g*., in an e-mail or file upload to an online repository). In other cases, DLP systems may prevent users from transmitting confidential information, such as financial information, proprietary product information, source code, or other protected data. As another example, DLP systems may prevent source code, product development plans, or other confidential information from leaving the organization (whether by way of e-mail, by copying to removable media or to an online repository, etc.).

While network DLP systems can prevent data loss while devices are connected to a network, mobile devices (*e.g*., laptops, smartphones, or other mobile devices with communications capabilities) containing or having access to sensitive data may be removed from the network on a regular basis. Once a device leaves a network protected by a network DLP system, endpoint DLP software installed on the device may be used to prevent data loss events.

In some cases, DLP systems may prevent accidental data loss, such as an event where a computer user tries to send sensitive data (e.g., payment card information or social security numbers) outside of a network. While monitoring data exfiltration from a network is computationally inexpensive (and feasible) when data is transmitted outside the network without encryption, monitoring data exfiltration at the network level may require additional configuration. For example, a network DLP system may need to be configured on a per-application basis or otherwise configured to allow the system to determine the application that generated the network traffic and an associated encryption/decryption scheme to use to decode encrypted traffic.

As protocols and applications change, additional configuration may be needed to monitor for data loss events. Because individual application configuration may be needed in order for a network DLP system to be able to monitor network traffic for potential data loss events. Further, network DLP systems may not be able to scan traffic for potential data loss events if the DLP system is not configured to decode traffic generated by an application. Thus, for some applications, such as applications used in advanced persistent threat (APT) attacks that attempt to silently exfiltrate sensitive data from an endpoint or server to a remote destination, network DLP systems may not be able to prevent data loss from these applications.

US 8 943 546 B1 discloses a system and method for detecting and protecting against potential data loss from unknown applications.

US 9 003 475 B1 discloses a computer-implemented method for applying data-loss-prevention policies.

US 2012/291087 A1 discloses a method and apparatus for detecting violations of data loss prevention policies based on reputation scores.

US 8 832 780 B1 discloses a data loss prevention agent that manages data loss prevention policies of a shared network file system.

US 2013/0247201 A1 discloses a system and method for malware and network reputation correlation.

### SUMMARY

Particular and preferred aspects of the invention are defined in the appended claims.

One embodiment of the present disclosure includes a method for preventing data loss at a computer system (e.g., an endpoint or server system). The method generally includes identifying a first application requesting to access a file accessible through the computer system. The DLP system present on the computer system determines a reputation associated with the first application. The DLP system may determine reputation from information stored locally on the computer system or from a reputation service in the cloud. If the reputation information indicates that the first application is trusted, the computer system allows the first application to access the file, subject to a data loss prevention (DLP) policy. If, however, the reputation information indicates that the first application is untrusted, the computer system blocks access to the file.

Another embodiment provides a computer-readable storage medium having instructions, which, when executed on a processor, performs an operation for preventing data loss at a computer system (e.g., an endpoint or server system). The operation generally includes identifying a first application requesting to access a file accessible through the computer system. The DLP system present on the computer system determines a reputation associated with the first application. The DLP system may determine reputation from information stored locally on the computer system or from a reputation service in the cloud. If the reputation information indicates that the first application is trusted, the computer system allows the first application to access the file, subject to a data loss prevention (DLP) policy. If, however, the reputation information indicates that the first application is untrusted, the computer system blocks access to the file.

Still another embodiment of the present invention includes a processor and a memory storing a program, which, when executed on the processor, performs an operation for preventing data loss at a computer system (*e.g*., an endpoint or server system). The operation generally includes identifying a first application requesting to access a file accessible through the computer system. The DLP system present on the computer system determines a reputation associated with the first application. The DLP system may determine reputation from information stored locally on the computer system or from a reputation service in the cloud. If the reputation information indicates that the first application is trusted, the computer system allows the first application to access the file, subject to a data loss prevention (DLP) policy. If, however, the reputation information indicates that the first application is untrusted, the computer system blocks access to the file.

### BRIEF DESCRIPTION OF THE DRAWINGS

So that the manner in which the above recited features of the present disclosure can be understood in detail, a more particular description of the disclosure, briefly summarized above, may be had by reference to embodiments, some of which are illustrated in the appended drawings. It is to be noted, however, that the appended drawings illustrate only exemplary embodiments and are therefore not to be considered limiting of its scope, may admit to other equally effective embodiments.
Figure 1 illustrates an example of a networked computing environment, according to one embodiment.
Figure 2 illustrates an example DLP endpoint system, according to one embodiment.
Figure 3 illustrates an example file system monitor, according to one embodiment.
Figure 4 illustrates an example network activity monitor, according to one embodiment.
Figure 5 illustrates example operations for determining an action to be performed by a DLP system in response to a process launch, according to one embodiment.
Figure 6 illustrates example operations for determining an action to be performed by a DLP system in response to establishment of a new network connection, according to one embodiment.
Figure 7 illustrates example operations for determining an action to be performed by a DLP system in response to detecting a network file transfer operation, according to one embodiment.
Figure 8 illustrates an example computing system for using reputation information in a data loss prevention system, according to one embodiment.

To facilitate understanding, identical reference numerals have been used, where possible, to designate identical elements that are common to the figures. It is contemplated that elements and features of one embodiment may be beneficially incorporated in other embodiments without further recitation.

### DETAILED DESCRIPTION

Embodiments presented herein describe techniques for using reputation information as part of a data loss prevention (DLP) system to monitor for and prevent data loss events at an endpoint system. For example, a DLP system can use reputation information as part of determining whether an application or a network location is trusted, untrusted, or unknown. For trusted applications or locations, the DLP system typically allows an application to request and transmit data to another destination, subject to a DLP policy for the data in question. For untrusted applications or locations, the DLP system can block access to sensitive data (or any data) before the application can begin to exfiltrate sensitive data from an endpoint system. For unknown applications or network destinations (*e.g*., applications or network destinations that are neither trusted nor untrusted), the DLP system can at least inform a user of the endpoint system of the originating application or the network destination. For some applications (*e.g*. applications that lack a trust status), the DLP system can further request that a user manually allow or block access to sensitive information by an application or transmission of such information to a network destination.

Advantageously, by using reputation information to determine whether applications, libraries, and network destinations can access potentially sensitive data, a DLP system can monitor for potential data loss events without requiring manual and continuous configuration of the DLP system to protect sensitive data. If known and trusted applications attempt to access potentially sensitive data, the DLP system may already be configured with decryption keys or other tools to monitor the data being accessed or transmitted by the application. Using the pre-configured data, a DLP system can decrypt network traffic generated by trusted or known applications to determine whether the transmitted data violates a DLP rule. Upon comparing transmitted data to a DLP rule, the DLP system can determine whether or not to block transmission of the data to the network destination. However, for untrusted applications or applications with an unknown trust status, where the DLP system may not be able to decrypt network traffic generated by the application, the DLP system can use application reputation as a proxy to determine whether to allow or block data transmission

Further, by using reputation information in an endpoint DLP system (*e.g*., a DLP system deployed on mobile computer or mobile terminal with communications capabilities), a DLP system can protect against targeted and inadvertent data loss events. Using reputation information may protect against data loss events regardless of whether the endpoint system is inside a network boundary protected by network DLP systems.

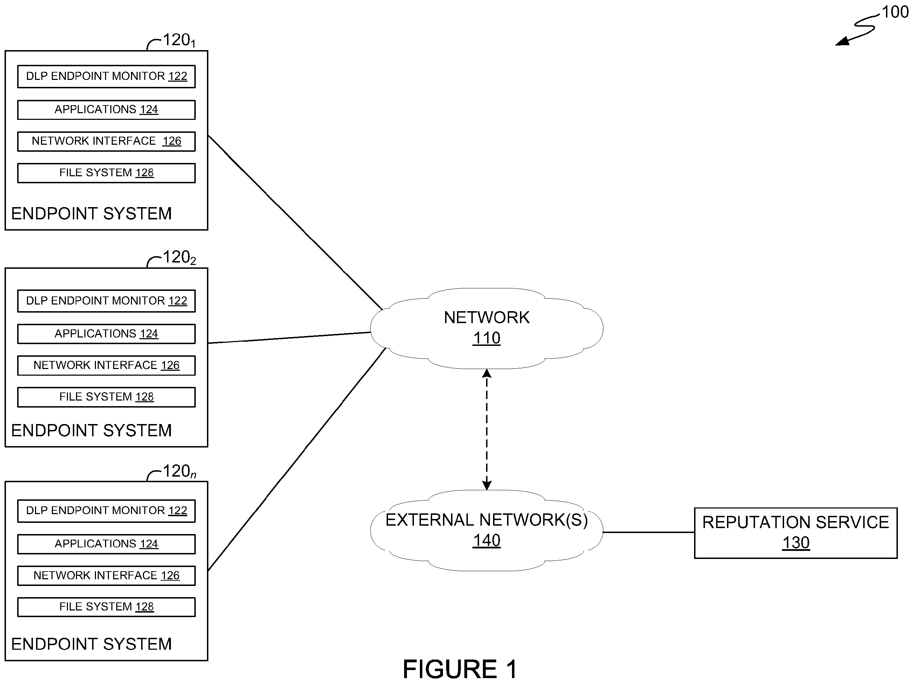

Figure 1 illustrates an example computing environment 100, according to one embodiment. As shown, the computing environment a plurality of endpoint systems 120, connected to a network 110. Network 110 may be connected to one or more external networks 140, and each of the endpoint systems may access a remote reputation service 130 through network 110 via external networks 140.

Each endpoint system 120 in network 110 may execute a data loss prevention system locally to monitor for and prevent against data loss events. As illustrated, endpoint systems 120 generally include a DLP endpoint monitor 122, one or more applications 124, a network interface 126, and a file system 128. DLP endpoint monitor is generally configured to monitor system 120 for activity on network interface 126 and file system 128, as well as application launches and downloads.

DLP endpoint monitor 122 generally includes an interface for querying a reputation service 130 for information about an application, library, or network destination's reputation. DLP endpoint monitor 122 may launch when endpoint system 120 is booted up. On startup, DLP endpoint monitor 122 may generate a list of network connections and processes or applications 124 which have an external network connection, along with the number of network connections per process or application 124. DLP endpoint monitor 122 may instruct file system 128 to begin monitoring for file open and/or read operations for applications 124 with network connections and may instruct file system 128 to discontinue monitoring for a specific application 124 when the application no longer has any active network connections. When a user launches new applications 124 and establish new network connections on network interface 126, DLP endpoint monitor 122 may add the new applications and network connections to the list of applications and network connections to be monitored.

In some cases, DLP endpoint monitor 122 can query reputation service 130 for the reputation of a downloaded program installation package before the installer executes and installs an application 124 on endpoint system 120. If the reputation service indicates that the downloaded package has a good reputation (*e.g*., a widely used and trusted piece of open source software, such as the Mozilla Firefox browser or the GIMP image manipulation program) or is trusted (*e.g*., commercially available software signed by the software provider), DLP endpoint monitor 122 may allow installation of the program from the downloaded program installation package. If, however, the reputation service indicates that the downloaded package is untrusted (*e.g*., includes malware, keyloggers, or other data security threats), DLP endpoint monitor 122 may block installation of the program and may additionally delete the downloaded program installation package. For applications that are neither trusted nor untrusted, DLP endpoint monitor 122 may at least inform the endpoint system's user that a software installation package was downloaded. For applications that have a reputation of "trending good," meaning that the application has been verified by others as an application that does not present a security risk but is not known to be good or trusted yet, DLP endpoint monitor 122 may notify the user that an application with a "trending good" reputation has been downloaded. Meanwhile, for applications that have an unknown reputation, DLP endpoint monitor 122 may request that a user affirmatively allow execution of the downloaded software installation package.

Similarly, DLP endpoint monitor 122 may monitor network interface 126 for new connections to systems connected to network 110 and/or external network(s) 140. DLP endpoint monitor 122 may query reputation service 130 about a network connection, which may include an Internet Protocol (IP) address and a port number at the destination. As discussed above with respect to application download packages, the DLP endpoint monitor 122 may receive information indicating whether the network destination is trusted, untrusted, or neither trusted nor untrusted and may take action based on the received reputation information to prevent data loss (*e.g*., from silent exfiltration of data from endpoint system 120 to an untrusted destination). For network connections that are trusted or good, DLP endpoint monitor 122 may allow data to be transmitted to the destination, subject to a DLP policy for the data (*e.g.*, policies designed to redact or block certain data, such as credit card numbers, personally identifiable information (*e.g*., US Social Security Numbers or UK National Insurance Numbers), and/or proprietary data from being transmitted to external systems). For network connections that are untrusted, DLP endpoint monitor 122 may block data transmission to the destination. Finally, if a network connection is neither trusted nor untrusted, DLP endpoint monitor 122 may at least inform a user that a network connection has been established with the destination. For unknown destinations that do not have reputation data, DLP endpoint monitor 122 may request that a user affirmatively allow data transmission to the identified destination.

In some cases, DLP endpoint monitor 122 may include "fingerprints" for certain trusted network destinations (*e.g*., a list of trusted network destinations including, for example, a destination's IP address and port). If a network destination is included in the set of "fingerprints," DLP endpoint monitor 122 need not request reputation information about the destination from a reputation service 130 before allowing or blocking data communications (*e.g*., according to a DLP policy) to the destination.

In some cases, DLP endpoint monitor 122 may request reputation information for an application 124 on application startup before the DLP endpoint monitor 122 instructs the network interface 126 and file system 128 to monitor the application's file open and/or read operations and network activity. If the application 124 is trusted or good, DLP endpoint monitor need not monitor the application's network activity. File system activity may be subject, as usual, to DLP policies for specific files or data (*e.g*., stored on an operating system clipboard). If the application 124 is untrusted, the DLP endpoint monitor 122 may block the application's access to the file system 128 or sensitive files stored on endpoint system 120, as well as access to the operating system clipboard and external network connections. Otherwise, the DLP endpoint monitor 122 can notify the user of application execution and request that the user allow or block application 124 from accessing file system 128 (or sensitive data stored in the file system), the operating system clipboard, and other data repositories in which sensitive data may be stored.

In some cases, DLP endpoint monitor 122 may include "fingerprints" for certain trusted applications 124, such as legitimate business applications (*e.g.*, word processors, spreadsheet programs, presentation programs, etc.), as well as libraries loaded in applications. If an application 124 (and any libraries loaded in the application 124) matches one of these "fingerprints," DLP endpoint monitor 122 need not request reputation information from reputation service 130 before allowing or blocking file access and/or network communications via the application.

As discussed above, DLP endpoint monitor 122 may additionally monitor application and/or library activity on file system 128 (*e.g*., application and or library access of a file stored on file system 128 for transmission to a remote location via network interface 126). DLP endpoint monitor 122 may request reputation information for the application 124 that is the source of the activity on file system 128, libraries loaded in application 124 (*e.g*., plug-ins or add-on programs that run within application 124), and the destination of a network connection established via network interface 126. In some cases, the DLP agent may proceed on the basis of the worst reputation data received from the reputation service 130. For example, if an application is "trending good," and the network destination is trusted, the DLP endpoint system 122 may allow the application to access files on file system 128 for transmission to the destination via network interface 126 (subject to any DLP policy for the files to be transmitted) and notify the user that the application 124 is transmitting data to the specified destination. In another example, if an application is trusted, an active library is unknown, and the network destination is untrusted, DLP endpoint system 122 may block file access.

As discussed above, data may remain subject to a DLP policy after DLP endpoint monitor 122 allows an application 124 access to file system 128. DLP endpoint monitor 122 may monitor file system 128 for open, read, and/or copy operations from file system 128. Before allowing the requested file operations on file system 128, file system 128 may examine information about file contents to determine an action to take in response to the requested file operations. For example, file system 128 may block access to files with sensitive data, allow access but either encrypt the file or redact sensitive data in the file, or request that a user affirmatively allow or block access to the file.

Reputation service 130 generally may be an existing service that uses crowdsourced data to determine whether applications and network destinations are trusted, untrusted, or unknown. In some cases, reputation service 130 may be hosted in the cloud and accessible by DLP endpoint monitor 122 via an external network 140 (*e.g*., the Internet). As new applications and threats are introduced into various computing environments, reputation service 130 may be updated to reflect the reputation of the new applications. For example, when a new version of an office productivity suite is released, reputation service 130 may be updated to reflect that the new version of the office productivity suite is trusted (like previous versions of the suite). Other applications may initially have an unproven or unknown reputation, and as reputation service 130 receives additional data about the application from other users, reputation service 130 may update the reputation to reflect user feedback about the application. In some cases, reputation data about known threats (*e.g*., applications that are known to be part of an ATP attack, rogue keyloggers, botnet software, etc.) may be stored in reputation service 130 with an untrusted reputation to prevent such applications from executing on endpoint systems.

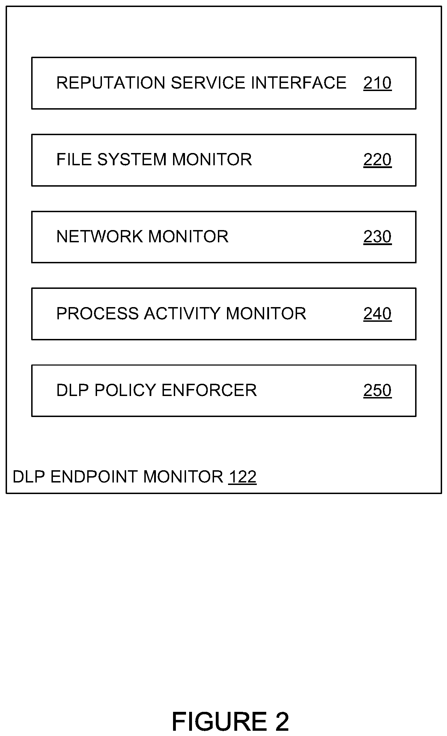

Figure 2 illustrates an example DLP endpoint monitor 122, according to one embodiment. As illustrated DLP endpoint monitor 122 includes a reputation service interface 210, file system monitor 220, network monitor 230, process activity monitor 240, and a DLP policy enforcer 250.

As discussed above, reputation service interface 210 allows components of the DLP endpoint to query a reputation service 130 for reputation data about an application, library, or network destination. As discussed above, reputation data obtained from a reputation service 130 via reputation service interface 210 may be broadly grouped into three categories: trusted, untrusted, and unknown. A DLP endpoint monitor 122 can generally allow applications with trusted or "good" reputations to run and communicate with trusted or "good" network destinations, subject to DLP policies that are designed to prevent sensitive data from leaving an organization's computer systems or networks. Meanwhile, a DLP endpoint monitor 122 can generally block untrusted applications or applications with "poor" reputations from executing and can block network connections between an endpoint system and the destination. Finally, reputations that are neither trusted nor untrusted, which triggers the DLP endpoint monitor 122 to at least generate a notification that an application is attempting to access data on the endpoint system or is attempting to send data to an unknown destination, can be broken down into two categories: trending good and unknown. While DLP endpoint monitor 122 need not take any further action beyond generating an alert for applications and network destinations with a "trending good" reputation, DLP endpoint monitor 122 may request that a user explicitly allow or block applications and/or network destinations with "unknown" reputations.

File system monitor 220 is generally configured to intercept file operations initiated by an application to determine whether to allow or block the requested file operations. In some cases, file system monitor 220 may be configured by the DLP endpoint monitor 122 to monitor file open and/or read operations for applications that have active network connections or previously had active network connections. When an application attempts to open and/or read a file, file system monitor 220 detects the attempted file operation and activates DLP policy enforcer 250 to determine whether to allow or block access to the requested file. DLP policy enforcer 250 can examine the contents of a file for sensitive data. Depending on presence of sensitive data and the application that is trying to access the file, which file system monitor 220 may provide when the file system monitor activates DLP policy enforcer 250, DLP policy enforcer can block access to the file, redact the sensitive data from the file, encrypt the file, or allow the application to open and read the file without modification.

As discussed above, network monitor 230 may be configured to monitor the creation of network connections to new destinations during application runtime. As an application creates and deletes network connections, network monitor 230 keeps track of the number of active network connections for each application so that file system monitor 220 and other components in DLP endpoint monitor 122 can determine whether to continue monitoring the application for file system and network activity.

Additionally, when an application creates a network connection, network monitor 230 can transmit information about the destination of the network connection (*e.g*., IP address and port number) to reputation service interface 210 to obtain reputation information for the destination. If data from reputation service interface 130 indicates that the destination address is untrusted or has a poor reputation (*e.g*., indicating that the destination address has been used by rogue programs for data exfiltration), network monitor 230 can block the application from using the network connection. Further, network monitor can additionally block the application from creating connections to the address in the future and can de-establish the connection.

Process activity monitor 240 is generally configured to monitor the endpoint system for application installation and execution. Process activity monitor 240 may monitor active processes (*e.g*., based on unique process identifiers) and determine that a new process has started up when a new process identifier is added to the list of active processes. When applications are launched on the endpoint system (either by a user or surreptitiously, in the case of malware downloaded onto a computer), process activity monitor 240 can detect the application and transmit information about the application (*e.g*., globally unique identifiers used by the application, the name of the executable file, application metadata, etc.) to reputation service 130 via reputation service interface 210. When process activity monitor 240 receives reputation data for the application, process activity monitor 240 can allow continued execution of the application (subject to DLP rules for file access, as described above) if the application is trusted or has a "good" reputation. If the received reputation data indicates that the application is untrusted or has a "poor" reputation, process activity monitor 240 can block execution of the application (*e.g*., using pkill on a UNIX system or the taskkill on Windows). In some cases, process activity monitor 240 may further initiate uninstall and cleanup operations to remove the application from the endpoint system. Finally, if the received reputation data indicates that the application is neither trusted nor untrusted, process activity monitor 240 may notify a user of application startup; for truly unknown applications, process activity monitor 240 may further request that a user affirmatively allow or block further execution of the application.

As discussed above, DLP policy enforcer 250 may be activated when an application allowed to execute by DLP endpoint monitor 122 attempts to open, read, and/or send a file or contents in a file to a destination outside of network 110. DLP policy enforcer 250 may receive, as input, information about a requested file, the application that requested access to the file, and/or information about the destination of the file (if an application is attempting to transfer a file from the endpoint system to a remote system). Based on the content of the file, the application that is attempting to access the file, DLP policy enforcer can block access to the file (*e.g*., if a user or application attempts to move sensitive data outside the organization), allow access to a redacted copy of the file, or allow unrestricted access to the file.

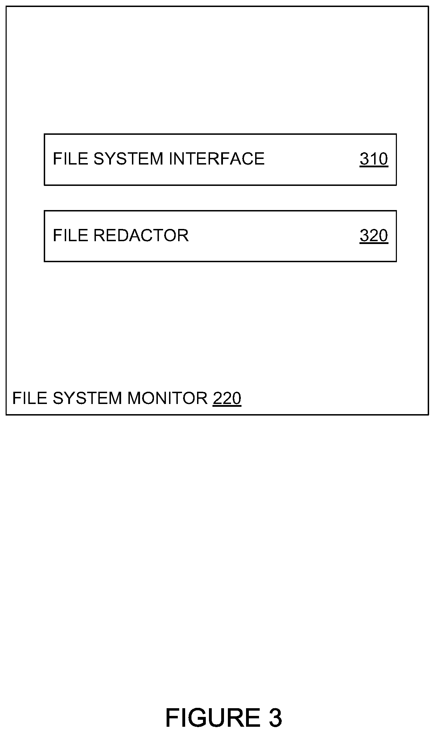

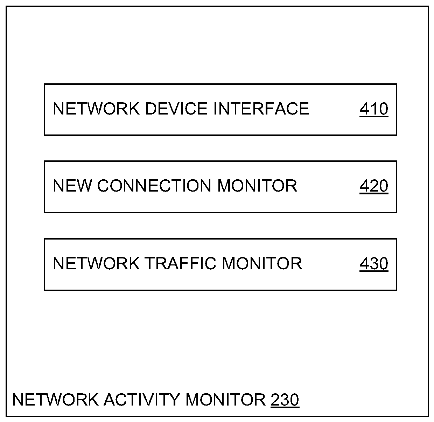

Figure 3 illustrates an example file system monitor, according to one embodiment. As illustrated, file system monitor 220 generally includes a file system interface 310 and a file redactor 320.

File system interface 310 generally allows applications to traverse a folder structure of the file system to find, open, read, and create files on file system 128 of an endpoint system. As discussed above, when an application (which DLP endpoint system 122 has allowed to run on the system) attempts to access a file via file system interface 310, file system monitor 122 activates DLP policy enforcer 250 to determine whether the application can access an unmodified version of the file, a redacted copy of the file, or is blocked from accessing the file. If DLP policy enforcer 250 indicates that the application can access a redacted version of the file, file system monitor generates a copy of the file and provides the copy to file redactor 320.

File redactor 320 is generally configured, when application performs a file read or open operation on a file, to scan the file's content for sensitive data and remove sensitive data from the file. For example, file redactor 320 can use string matching to remove particular strings from a file or regular expression matching to remove data with a regular, known pattern (*e.g*., US social security numbers, payment card information, etc.). File redactor 320 may replace the data with placeholder characters and save the redacted file in a temporary file store. File system interface 310 may then provide the redacted file to the requesting application, which may prevent sensitive data from being exfiltrated from an organization (*e.g*., by a user saving sensitive data to removable storage or sending sensitive data as an e-mail attachment).

Figure 4 illustrates an example network monitor, according to one embodiment. As illustrated, network activity monitor 230 includes a network device interface 410, new connection monitor 420, and a network traffic monitor 130. Network device interface 410 provides network activity monitor 230 access to the network devices on an endpoint device (*e.g*., wired Ethernet ports, wireless network interfaces, etc.).

New connection monitor 420 may monitor network devices via network device interface 410 to determine when applications operating on the endpoint device create new network connections for data transmission between the endpoint system and a remote system. When an application creates a new network connection, new connection monitor 420 can extract information about the destination of the network connection (*e.g*., IP address and port) and query reputation service 130 for information about the destination. As discussed above, if the reputation service 130 indicates that the destination is trusted, new connection monitor 420 need not take any further action. If the reputation service 130 indicates that the destination is untrusted, new connection monitor 420 may end the network connection and prevent applications from establishing new connections to the destination. Otherwise, new connection monitor 420 may inform the user of an endpoint system that an application established a connection to a system at the destination address. If the reputation of the destination is "trending good," the new connection monitor 420 need not take any further action. Otherwise, if the reputation of the destination is unknown, new connection monitor 420 may request that a user explicitly allow or block the connection.

Network traffic monitor 430 generally allows DLP policy enforcer 250 to scan network traffic for potential data loss events that DLP policies at file system interface 220 may have missed. Network traffic monitor 430 may decode packet streams from applications running on endpoint system 120 to examine the data being transmitted from endpoint system 120. For example, network traffic monitor 430 may queue the packets constituting an e-mail message a user is attempting to send. When network traffic monitor 430 receives all the packets constituting the e-mail message, network traffic monitor 430 may examine the contents of the e-mail message to determine if the message includes sensitive data that should not leave the organization. If network traffic monitor 430 determines that traffic does not include sensitive data, network traffic monitor 430 transfers the packets to network device interface 410 for transmission to the destination. Otherwise, network traffic monitor 430 may block packet transmission and indicate to a user that network activity monitor 230 has enforced a DLP policy against certain network activity (*e.g*., an e-mail).

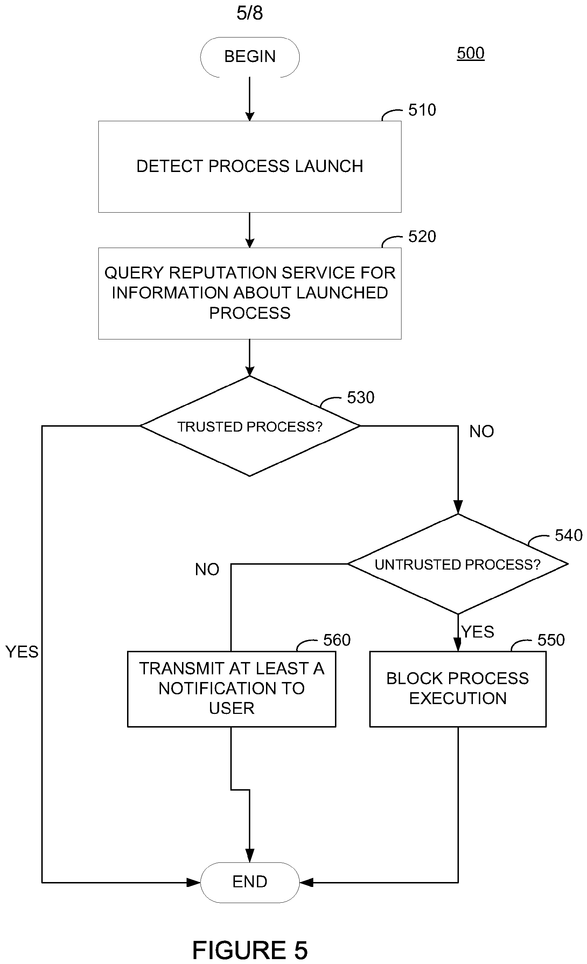

Figure 5 illustrates example operations 500 that may be performed by a DLP endpoint system to allow or block execution of a process (or application) based on reputation information associated with the process, according to one embodiment. Operations 500 begin at step 510, where the DLP endpoint system detects a process launch. As discussed above, a DLP endpoint system may detect a process launch when the DLP endpoint system detects the presence of a process identifier that was previously not on a list of currently running processes in a new list of processes.

At step 520, the DLP endpoint system queries a reputation service for information about the launched process. As discussed above, the DLP endpoint service can obtain information about the application, such as a globally unique identifier, the name of the executable file, and/or metadata about the application, and transmit the information to a reputation service 130. In response, the DLP endpoint system receives information indicating whether the process is trusted, untrusted, or neither trusted nor untrusted.

At step 530, the DLP endpoint system examines the response from the reputation service to determine if the process is a trusted process (i.e., the process is known to be part of a legitimate application). If the reputation information indicates that the process is trusted, operations 500 end. As discussed above, further operations by the application (*e.g*., file system operations) are subject to a DLP policy associated with the data the process attempts to obtain from a file system or transmit out of the endpoint system (and network 110).

If, however, the reputation information indicates that the process is not a known, trusted process, operations 500 proceed to step 540, where the DLP endpoint system determines if the process is an untrusted process (*e.g*., malware or a persistent threat). If the process is untrusted, at step 550, the DLP endpoint system blocks process execution and ends. Otherwise, the process is either "trending good" or "unknown," and at step 560, the DLP endpoint system generates at least a notification for a user of the endpoint system to inform the user that a process has been launched. As discussed above, if a process has a "trending good" reputation, the DLP endpoint system need not take any additional action beyond notifying a user that the process has been launched. If, however, the process is "unknown," the DLP endpoint system may further request that the user explicitly allow or block process execution.

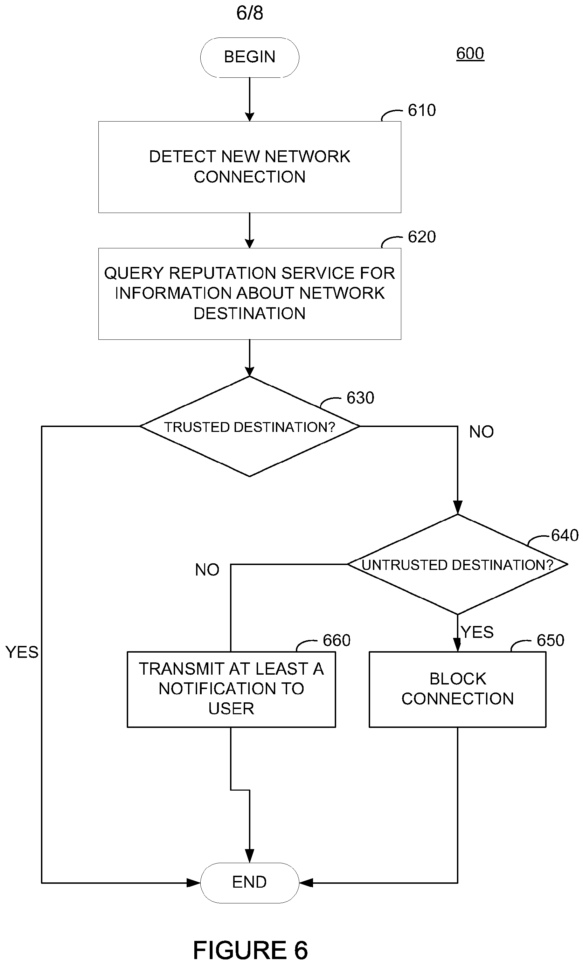

Figure 6 illustrates example operations 600 that may be performed by a DLP endpoint system to allow or block creation of a network connection based on reputation information associated with the destination of the network connection, according to one embodiment. Operations 600 begin at step 610, where the DLP endpoint system detects that an application has created a new network connection. As discussed above, a DLP endpoint system can detect the creation of a new network connection by maintaining, for each application operating on the endpoint system, a list of active network connections. When an application creates a new network connection, the previous list of active network connections will be different from the current list of active network connections.

At step 620, the DLP endpoint system queries a reputation service for information about the network connection destination. As discussed above, the DLP endpoint system may provide the destination's IP address and port number to reputation service 130. In response, the DLP endpoint system receives information indicating whether the destination is trusted, untrusted, or neither trusted nor untrusted.

At step 630, the DLP endpoint system examines the response from the reputation service to determine if the destination is a trusted destination. If the reputation information indicates that the destination is trusted (*i.e*., the destination is known to be a destination used for legitimate network communications that do not pose a risk of data loss), operations 600 end.

If the reputation information indicates that the destination is not a known, trusted destination, operations 600 proceed to step 640, where the DLP endpoint system examines the reputation information to determine if the destination is an untrusted destination (*e.g*., a destination known to be used by malware or other data security threats for data exfiltration). If the destination is untrusted, at step 650, the DLP endpoint system blocks creation of the network connection and ends. As discussed above, DLP endpoint system may block creation of the network connection by removing the network connection from the endpoint system and preventing applications from establishing future connections to the destination. Otherwise, the destination is either "trending good" or "unknown," and at step 660, the DLP endpoint system generates at least a notification for a user of the endpoint system to inform the user that an application has attempted to create a network connection to the destination. As discussed above, if the destination has a "trending good" reputation, the DLP endpoint system need not take any further action beyond notifying the user that the application created the network connection. If, however, the destination has an "unknown" reputation, the DLP endpoint system may request that a user explicitly allow or block the application from establishing the network connection.

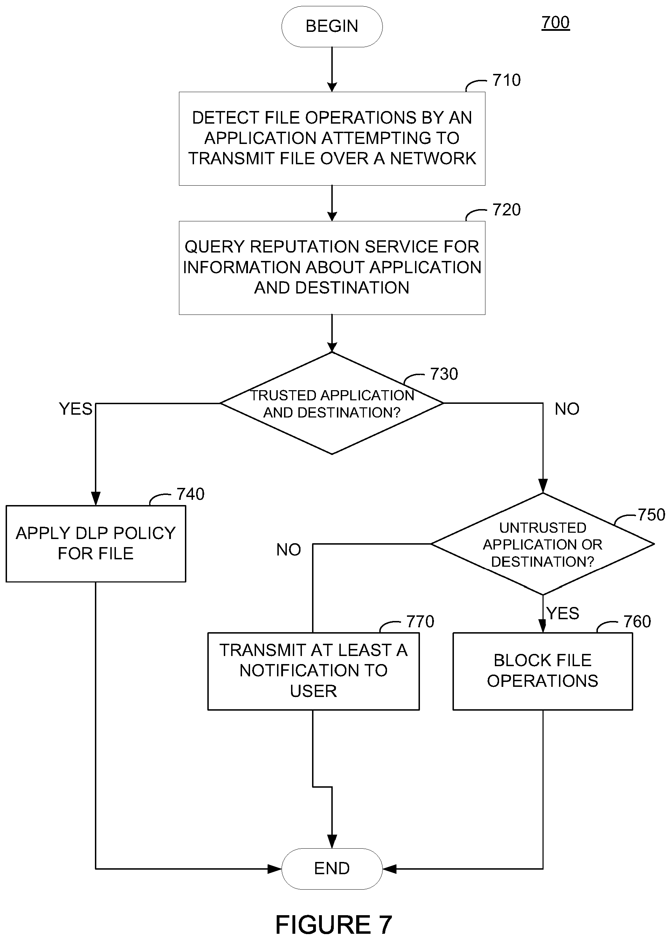

Figure 7 illustrates example operations 700 that may be performed by a DLP endpoint system for using reputation information to prevent against data loss events, according to one embodiment. Operations 700 begin at step 710, where the DLP endpoint system detects file operations by an application attempting to transmit a file over a network. At step 720, the DLP endpoint system queries a reputation service for information about the application and the file's destination. For both the application and destination, the DLP endpoint system receives information from the reputation service indicating if the application and destination are trusted, untrusted, or neither trusted nor untrusted.

At step 730, the DLP endpoint system examines the received reputation information to determine if the application and destination are both known to be trusted. Upon determining that both the application and destination are known to be trusted, at step 740, the DLP endpoint system applies a DLP policy specific to the file the application is attempting to send to the destination. As discussed above, the DLP endpoint system can examine the file for sensitive data and determine whether to block or redact data in the file, even though the application and destination are both trusted.

If one or both of the application and destination are not trusted, at step 750, the DLP endpoint system determines whether the application and/or destination are untrusted. If one or both of the application and destination are untrusted, at step 760, the DLP endpoint system blocks file operations. Otherwise, at step 770, the DLP endpoint system generates a notification that the application has attempted to transmit the file to the destination. As discussed above, if both the application and destination have a "trending good" reputation, DLP endpoint system need not take any further action. Otherwise, one or both the application and destination have an "unknown" reputation, and the DLP endpoint system may request that a user explicitly allow or block the application from transmitting the file to the destination.

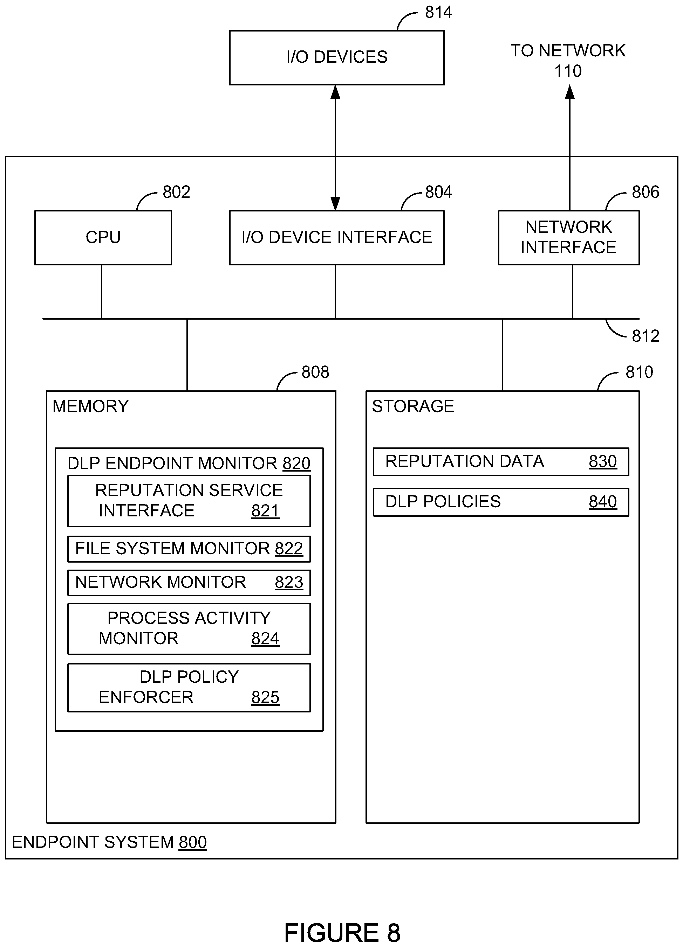

Figure 8 illustrates an example DLP system 800 that uses reputation data about applications, libraries, and network destinations to monitor for potential data loss events, according to an embodiment. As shown, the DLP system 800 includes, without limitation, a central processing unit (CPU) 802, one or more I/O device interfaces 804 which may allow for the connection of various I/O devices 814 (*e.g*., keyboards, displays, mouse devices, pen input, etc.) to the DLP system 800, network interface 806, a memory 808, storage 810, and an interconnect 812.

CPU 802 may retrieve and execute programming instructions stored in the memory 808. Similarly, the CPU 802 may retrieve and store application data residing in the memory 808. The interconnect 812 transmits programming instructions and application data, among the CPU 802, I/O device interface 804, network interface 806, memory 808, and storage 810. CPU 802 is included to be representative of a single CPU, multiple CPUs, a single CPU having multiple processing cores, and the like. Additionally, the memory 808 is included to be representative of a random access memory. Furthermore, the storage 810 may be a disk drive. Although shown as a single unit, the storage 810 may be a combination of fixed and/or removable storage devices, such as fixed disc drives, removable memory cards or optical storage, network attached storage (NAS), or a storage area-network (SAN).

As shown, memory 808 includes a DLP endpoint system 820, which monitors endpoint system 800 for process execution, file access operations, and network operations to prevent against potential data loss events. DLP endpoint system 820 includes a reputation service interface 821, file system monitor 822, network monitor 823, process activity monitor 824, and DLP policy enforcer 825.

As discussed above, reputation service interface 821 receives data about applications, libraries, and network destinations from file system monitor 822, network monitor 823 and process activity monitor 824. Reputation service interface 821 may transmit a query based on the received data to a remote reputation service via network interface 806 and receive data from the reputation service indicating if the application, library, or network destination is trusted, untrusted, or neither trusted nor untrusted.

File system monitor 822 is configured to monitor for file open and read operations performed by applications executing on endpoint system 800. As discussed above, when an application attempts to access a file (*e.g*., stored locally in storage 810 or remotely on a network file store), file system monitor 822 can request information about the application's reputation, and, if necessary, the reputation of a network destination (*e.g*., via reputation service interface 821), to determine whether to allow the application to access the requested file, subject to DLP rules for the file, or block access to the requested file.

Network monitor 823, as discussed above, may monitor network interface 806 for new connections and may additionally monitor network interface 806 for data transmitted to remote systems via the network interface. When an application creates a new network connection, network monitor 823 may request information about the destination's reputation (*e.g*., via reputation service interface 821). Based on the destination's reputation, network monitor 823 can allow the application to establish the network connection, inform a user that the application has established a connection to the destination, request permission to establish the connection, or block the application from establishing the connection.

Process activity monitor 824 is generally configured to monitor when processes are launched on endpoint system 800. When a process is launched (either by a user or another application), process activity monitor 825 requests reputation information about the process from a reputation service (*e.g*., via reputation service interface 821). Based on the process's reputation, process activity monitor 824 can allow execution of the process, inform a user that the process was launched, request that a user allow or block the process from executing on endpoint system 800, or block execution of the process.

DLP endpoint service may invoke DLP policy enforcer 825, for example, during file system operations when an application attempts to open a file, or when an application attempts to transmit a file to a remote destination. As discussed above, if DLP endpoint service 820 allows an application to run or allows an application to establish a network connection, files in storage 810 on endpoint system 800 and/or accessible through a network file store may remain subject to DLP rules designed to prevent data loss events. DLP policy enforcer 825 may examine files for sensitive content and determine if applications are allowed to access an unaltered copy of the file or a redacted version of the file, or if applications are blocked from accessing the file. Additionally, DLP policy enforcer 825 may monitor network traffic to determine if an application is transmitting sensitive data via network interface 806, and if so, determine whether to allow the application to continue transmitting the data without redaction, redact the data before network traffic leaves endpoint system 800, or block transmission of the data.

While the foregoing is directed to embodiments of the present disclosure, other and further embodiments of the disclosure may be devised without departing from the basic scope thereof, and the scope thereof is determined by the claims that follow.

## Claims

1. A method for preventing data loss at a computer system, comprising:
identifying a first application requesting to access a file accessible through the computer system;
determining a reputation associated with the first application;
if the reputation information indicates that the first application is trusted, allowing the first application to access the file, subject to a data loss prevention, DLP, policy;
if the reputation information indicates that the first application is untrusted, blocking access to the file;
if the reputation information neither indicates that the first application is trusted or untrusted, breaking the reputation information down in one of the categories of group comprising trending good and unknown, wherein trending good means that the application has been verified by others as an application that does not present a security risk but is not known to be trusted yet;
if the reputation information is trending good, notifying a user that the first application has requested to access a file; and
if the reputation information is unknown, requesting a user to manually allow or block access to the file.

2. A method (500) for preventing data loss at an endpoint computer system, wherein the method is executed by a DLP endpoint system operating on the endpoint computer system and comprises:
detecting (510) a process launch on the computer system;
querying (520) a reputation service for reputation information of the launched process;
if the reputation information indicates that the launched process is trusted (530, YES), subjecting further operations of the launched process to a DLP policy associated with the data the process attempts to obtain from a file system or to transmit out of the endpoint computer system;
if the reputation information indicates that the launched process is untrusted (530, NO; 540, YES), blocking (550) process execution of the launched process;
if the reputation information neither indicates that the launched process is trusted or untrusted (540, NO), breaking the reputation information down in one of the categories of group comprising trending good and unknown, wherein trending good means that the launched process has been verified by others as a process that does not present a security risk but is not known to be trusted yet, and notifying (560) a user of the endpoint system that a process has been launched;
if the reputation information is trending good, not taking any additional action beyond the notifying (560) the user that the process has been launched; and
if the reputation information is unknown, requesting a user of the endpoint system to explicitly allow or block process execution.

3. A method (600) for preventing data loss at an endpoint computer system, wherein the method is executed by a DLP endpoint system operating on the endpoint computer system and comprises:
detecting (610) that an application on the computer system has created a new network operation;
querying (620) a reputation service for reputation information about the network connection destination;
if the reputation information indicates that the destination is trusted (630, YES), allowing the application to perform network communications with the destination;
if the reputation information indicates that the destination is untrusted (630, NO; 640, YES), blocking (650) creation of the network connection;
if the reputation information neither indicates that the destination is trusted or untrusted (640, NO), breaking the reputation information down in one of the categories of group comprising trending good and unknown, wherein trending good means that the network connection destination has been verified by others as a destination that does not present a security risk but is not known to be trusted yet, and notifying (660) a user of the endpoint system that an application has attempted to create a network communication to the destination;
if the reputation information is trending good, not taking any additional action beyond the notifying (660) the user that the application has attempted to create a network communication to the destination; and
if the reputation information is unknown, requesting a user of the endpoint system to explicitly allow or block the application from establishing the network connection.

4. A method (700) for preventing data loss at an endpoint computer system, wherein the method is executed by a DLP endpoint system operating on the endpoint computer system and comprises:
detecting (710) file operations by an application on the computer system attempting to transmit a file over a network;
querying (720) a reputation service for reputation information about the application and the file's destination;
if the reputation information indicates that both the application and the destination are trusted (730, YES), applying (740) a DLP policy specific to the file the application is attempting to send to the destination;
if the reputation information indicates that one or both of the application and the destination are untrusted (730, NO; 750, YES), blocking (760) file operations;
if the reputation information neither indicates that the application and the destination is trusted nor indicates that one or both of the application and the destination are untrusted (750, NO), breaking the reputation information down in one of the categories of group comprising trending good and unknown, wherein trending good means that the application and the destination have been verified by others as an application and a destination that do not present a security risk but are not known to be trusted yet, and notifying (770) a user of the endpoint system that an application has attempted to transmit the file to the destination;
if the reputation information is trending good, not taking any additional action beyond the notifying (770) the user that that the application has attempted to transmit the file to the destination; and
if the reputation information is unknown, requesting a user of the endpoint system to explicitly allow or block the application from transmitting the file to the destination.

5. A computer-readable storage medium storing instructions, which, when executed on a processor, perform an operation for preventing data loss at a computer system comprising:
identifying a first application requesting to access a file accessible through the computer system;
determining a reputation associated with the first application;
if the reputation information indicates that the first application is trusted, allowing the first application to access the file, subject to a data loss prevention, DLP, policy;
if the reputation information indicates that the first application is untrusted, blocking access to the file;
if the reputation information neither indicates that the first application is trusted or untrusted, breaking the reputation information down in one of the categories of group comprising trending good and unknown, wherein trending good means that the application has been verified by others as an application that does not present a security risk but is not known to be trusted yet;
if the reputation information is trending good, notifying a user that the first application has requested to access a file; and
if the reputation information is unknown, requesting a user to manually allow or block access to the file.

6. A computer-readable storage medium storing instructions, which, when executed on a processor, perform an operation (500) for preventing data loss at an endpoint computer system, wherein the operation (500) is executed by a DLP endpoint system operating on the endpoint computer system and comprises:
detecting (510) a process launch on the computer system;
querying (520) a reputation service for reputation information of the launched process;
if the reputation information indicates that the launched process is trusted (530, YES), subjecting further operations of the launched process to a DLP policy associated with the data the process attempts to obtain from a file system or to transmit out of the endpoint computer system;
if the reputation information indicates that the launched process is untrusted (530, NO; 540, YES), blocking (550) process execution of the launched process;
if the reputation information neither indicates that the launched process is trusted or untrusted (540, NO), breaking the reputation information down in one of the categories of group comprising trending good and unknown, wherein trending good means that the launched process has been verified by others as a process that does not present a security risk but is not known to be trusted yet, and notifying (560) a user of the endpoint system that a process has been launched;
if the reputation information is trending good, not taking any additional action beyond the notifying (560) the user that the process has been launched; and
if the reputation information is unknown, requesting a user of the endpoint system to explicitly allow or block process execution.

7. A computer-readable storage medium storing instructions, which, when executed on a processor, perform an operation (600) for preventing data loss at an endpoint computer system, wherein the operation (600) is executed by a DLP endpoint system operating on the endpoint computer system and comprises:
detecting (610) that an application on the computer system has created a new network operation;
querying (620) a reputation service for reputation information about the network connection destination;
if the reputation information indicates that the destination is trusted (630, YES), allowing the application to perform network communications with the destination;
if the reputation information indicates that the destination is untrusted (630, NO; 640, YES), blocking (650) creation of the network connection;
if the reputation information neither indicates that the destination is trusted or untrusted (640, NO), breaking the reputation information down in one of the categories of group comprising trending good and unknown, wherein trending good means that the network connection destination has been verified by others as a destination that does not present a security risk but is not known to be trusted yet, and notifying (660) a user of the endpoint system that an application has attempted to create a network communication to the destination;
if the reputation information is trending good, not taking any additional action beyond the notifying (660) the user that the application has attempted to create a network communication to the destination; and
if the reputation information is unknown, requesting a user of the endpoint system to explicitly allow or block the application from establishing the network connection.

8. A computer-readable storage medium storing instructions, which, when executed on a processor, perform an operation (700) for preventing data loss at an endpoint computer system, wherein the operation (700) is executed by a DLP endpoint system operating on the endpoint computer system and comprises:
detecting (710) file operations by an application on the computer system attempting to transmit a file over a network;
querying (720) a reputation service for reputation information about the application and the file's destination;
if the reputation information indicates that both the application and the destination are trusted (730, YES), applying (740) a DLP policy specific to the file the application is attempting to send to the destination;
if the reputation information indicates that one or both of the application and the destination are untrusted (730, NO; 750, YES), blocking (760) file operations;
if the reputation information neither indicates that the application and the destination is trusted nor indicates that one or both of the application and the destination are untrusted (750, NO), breaking the reputation information down in one of the categories of group comprising trending good and unknown, wherein trending good means that the application and the destination have been verified by others as an application and a destination that do not present a security risk but are not known to be trusted yet, and notifying (770) a user of the endpoint system that an application has attempted to transmit the file to the destination;
if the reputation information is trending good, not taking any additional action beyond the notifying (770) the user that that the application has attempted to transmit the file to the destination; and
if the reputation information is unknown, requesting a user of the endpoint system to explicitly allow or block the application from transmitting the file to the destination.

9. A system, comprising:
a processor; and
memory storing code, which, when executed on the processor, performs an operation for preventing data loss at a computer system comprising:
identifying a first application requesting to access a file accessible through the computer system;
determining a reputation associated with the first application;
if the reputation information indicates that the first application is trusted, allowing the first application to access the file, subject to a data loss prevention, DLP, policy;
if the reputation information indicates that the first application is untrusted, blocking access to the file;
if the reputation information neither indicates that the first application is trusted or untrusted, breaking the reputation information down in one of the categories of group comprising trending good and unknown, wherein trending good means that the application has been verified by others as an application that does not present a security risk but is not known to be trusted yet;
if the reputation information is trending good, notifying a user that the first application has requested to access a file; and
if the reputation information is unknown, requesting a user to manually allow or block access to the file.

10. An endpoint computer system, comprising:
a processor; and
memory storing code, which, when executed on the processor, performs an operation (500) for preventing data loss at the endpoint computer system, wherein the operation (500) is executed by a DLP endpoint system operating on the endpoint computer system and comprises:
detecting (510) a process launch on the computer system;
querying (520) a reputation service for reputation information of the launched process;
if the reputation information indicates that the launched process is trusted (530, YES), subjecting further operations of the launched process to a DLP policy associated with the data the process attempts to obtain from a file system or to transmit out of the endpoint computer system;
if the reputation information indicates that the launched process is untrusted (530, NO; 540, YES), blocking (550) process execution of the launched process;
if the reputation information neither indicates that the launched process is trusted or untrusted (540, NO), breaking the reputation information down in one of the categories of group comprising trending good and unknown, wherein trending good means that the launched process has been verified by others as a process that does not present a security risk but is not known to be trusted yet, and notifying (560) a user of the endpoint system that a process has been launched;
if the reputation information is trending good, not taking any additional action beyond the notifying (560) the user that the process has been launched; and
if the reputation information is unknown, requesting a user of the endpoint system to explicitly allow or block process execution

11. An endpoint computer system, comprising:
a processor; and
memory storing code, which, when executed on the processor, performs an operation (600) for preventing data loss at the endpoint computer system, wherein the operation (600) is executed by a DLP endpoint system operating on the endpoint computer system and comprises:
detecting (610) that an application on the computer system has created a new network operation;
querying (620) a reputation service for reputation information about the network connection destination;
if the reputation information indicates that the destination is trusted (630, YES), allowing the application to perform network communications with the destination;
if the reputation information indicates that the destination is untrusted (630, NO; 640, YES), blocking (650) creation of the network connection;
if the reputation information neither indicates that the destination is trusted or untrusted (640, NO), breaking the reputation information down in one of the categories of group comprising trending good and unknown, wherein trending good means that the network connection destination has been verified by others as a destination that does not present a security risk but is not known to be trusted yet, and notifying (660) a user of the endpoint system that an application has attempted to create a network communication to the destination;
if the reputation information is trending good, not taking any additional action beyond the notifying (660) the user that the application has attempted to create a network communication to the destination; and
if the reputation information is unknown, requesting a user of the endpoint system to explicitly allow or block the application from establishing the network connection.

12. An endpoint computer system, comprising:
a processor; and
memory storing code, which, when executed on the processor, performs an operation (700) for preventing data loss at the endpoint computer system, wherein the operation (700) is executed by a DLP endpoint system operating on the endpoint computer system and comprises:
detecting (710) file operations by an application on the computer system attempting to transmit a file over a network;
querying (720) a reputation service for reputation information about the application and the file's destination;
if the reputation information indicates that both the application and the destination are trusted (730, YES), applying (740) a DLP policy specific to the file the application is attempting to send to the destination;
if the reputation information indicates that one or both of the application and the destination are untrusted (730, NO; 750, YES), blocking (760) file operations;
if the reputation information neither indicates that the application and the destination is trusted nor indicates that one or both of the application and the destination are untrusted (750, NO), breaking the reputation information down in one of the categories of group comprising trending good and unknown, wherein trending good means that the application and the destination have been verified by others as an application and a destination that do not present a security risk but are not known to be trusted yet, and notifying (770) a user of the endpoint system that an application has attempted to transmit the file to the destination;
if the reputation information is trending good, not taking any additional action beyond the notifying (770) the user that that the application has attempted to transmit the file to the destination; and
if the reputation information is unknown, requesting a user of the endpoint system to explicitly allow or block the application from transmitting the file to the destination.

## Patentansprüche

1. Ein Verfahren zum Verhindern von Datenverlust bei einem Computersystem, aufweisend:
Identifizieren einer ersten Anwendung, welche Zugang zu einer Datei anfordert, welche durch das Computersystem zugänglich ist;
Bestimmen einer Reputation, welche mit der ersten Anwendung verknüpft ist;
falls die Reputationsinformation angibt, dass der ersten Anwendung vertraut wird, Erlauben der ersten Anwendung, auf die Datei zuzugreifen, einer Datenschutzprävention, DLP, Richtlinie unterzogen;
falls die Reputationsinformation angibt, dass der ersten Anwendung nicht vertraut wird, Blockieren des Zugangs zu der Datei;
Falls die Reputationsinformation weder angibt, dass der ersten Anwendung vertraut wird noch nicht vertraut wird, Zerlegen der Reputationsinformation in eine der Kategorien einer Gruppe, aufweisend tendenziell gut und unbekannt, wobei tendenziell gut bedeutet, dass die Anwendung von anderen als eine Anwendung verifiziert wurde, welche kein Sicherheitsrisiko darstellt, jedoch noch unbekannt ist, ob ihr zu vertrauen ist;
falls die Reputationsinformation tendenziell gut ist, Benachrichtigen eines Benutzers, dass die erste Anwendung angefordert hat, auf eine Datei zuzugreifen; und
falls die Reputationsinformation unbekannt ist, Auffordern eines Benutzers, den Zugriff auf die Datei manuell zu erlauben oder zu blockieren.

2. Ein Verfahren (500) zum Verhindern von Datenverlust bei einem Endpunkt-Computersystem, wobei das Verfahren mittels eines DLP Endpunkt-Systems ausgeführt wird, welches auf dem Endpunkt-Computersystem betrieben wird, und aufweist:
Detektieren (510) eines Prozessstarts auf dem Computersystem;
Abfragen (520) eines Reputationsdienstes nach einer Reputationsinformation des gestarteten Prozesses;
falls die Reputationsinformation angibt, dass dem gestarteten Prozess vertraut wird (530, YES), Unterziehen der weiteren Vorgänge des gestarteten Prozesses einer DLP Richtlinie, welche mit den Daten verknüpft ist, welche der Vorgang versucht, von einem Dateisystem zu erhalten oder aus dem Endpunkt-Computersystem zu übertragen;
falls die Reputationsinformation angibt, dass dem gestarteten Prozess nicht vertraut wird (530, NO; 540, YES), Blockieren (550) der Prozessausführung des gestarteten Prozesses;
falls die Reputationsinformation weder angibt, dass dem gestarteten Prozess vertraut wird noch nicht vertraut wird (540, NO), Zerlegen der Reputationsinformation in eine der Kategorien einer Gruppe, aufweisend tendenziell gut und unbekannt, wobei tendenziell gut bedeutet, dass der gestartete Prozess von anderen als ein Prozess verifiziert wurde, welcher kein Sicherheitsrisiko darstellt, jedoch noch nicht bekannt ist, ob ihm zu vertrauen ist, und Benachrichtigen (560) eines Benutzers des Endpunkts-Systems, dass ein Prozess gestartet wurde;
falls die Reputationsinformation tendenziell gut ist, nicht Ergreifen einer zusätzlichen Maßnahme über das Benachrichtigen (560) des Benutzers hinaus, dass der Prozess gestartet wurde; und
falls die Reputationsinformation unbekannt ist, Auffordern eines Benutzers des Endpunkt-Systems, die Prozessausführung explizit zu erlauben oder zu blockieren.

3. Ein Verfahren (600) zum Verhindern von Datenverlust bei einem Endpunkt-Computersystem, wobei das Verfahren mittels eines DLP Endpunkt-Systems ausgeführt wird, welches auf dem Endpunkt-Computersystem betrieben wird, und aufweist:
Detektieren (610), dass eine Anwendung auf dem Computersystem einen neuen Netzwerkvorgang erzeugt hat;
Abfragen (620) eines Reputationsdiensts nach einer Reputationsinformation über das Netzwerkverbindungziel;
falls die Reputationsinformation angibt, dass dem Ziel vertraut wird (630, YES), Erlauben der Anwendung, Netzwerkkommunikationen mit dem Ziel auszuführen;
falls die Reputationsinformation angibt, dass dem Ziel nicht vertraut wird (630, NO; 640, YES), Blockieren (650) der Erzeugung der Netzwerkverbindung;
falls die Reputationsinformation weder angibt, dass dem Ziel vertraut wird noch nicht vertraut wird (640, NO), Zerlegen der Reputationsinformation in eine der Kategorien einer Gruppe, aufweisend tendenziell gut und unbekannt, wobei tendenziell gut bedeutet, dass das Netzwerkverbindungsziel von anderen als ein Ziel verifiziert wurde, welches kein Sicherheitsrisiko darstellt, jedoch noch unbekannt ist, ob ihm zu vertrauen ist, und Benachrichtigen (660) eines Benutzers des Endpunkt-Systems, dass eine Anwendung versucht hat, eine Netzwerkkommunikation mit dem Ziel herzustellen;
Falls die Reputationsinformation tendenziell gut ist, nicht Ergreifen einer zusätzlichen Maßnahme über das Benachrichtigen (660) des Benutzers hinaus, dass die Anwendung versucht hat, eine Netzwerkkommunikation mit dem Ziel herzustellen; und
falls die Reputationsinformation unbekannt ist, Auffordern eines Benutzers des Endpunkt-Systems, explizit zu erlauben oder zu blockieren, dass die Anwendung die Netzwerkverbindung herstellt.

4. Ein Verfahren (700) zum Verhindern von Datenverlust bei einem Endpunkt-Computersystem, wobei das Verfahren mittels eines DLP Endpunkt-Systems ausgeführt wird, welches auf dem Endpunkt-Computersystem betrieben wird, und aufweist:
Detektieren (710) von Dateivorgängen mittels einer Anwendung auf dem Computersystem, welche versucht, eine Datei über ein Netzwerk zu übertragen;
Abfragen (720) eines Reputationsdienstes nach einer Reputationsinformation über die Anwendung und das Ziel der Datei;
falls die Reputationsinformation angibt, dass sowohl der Anwendung als auch dem Ziel vertraut werden (730, YES), Anwenden (740) einer DLP Richtlinie spezifisch auf die Datei, welche die Anwendung versucht, zu dem Ziel zu senden;
falls die Reputationsinformation angibt, dass einer oder beiden von der Anwendung und dem Ziel nicht vertraut werden (730, NO; 750, YES), Blockieren (760) der Dateivorgänge;
falls die Reputationsinformation weder angibt, dass der Anwendung und dem Ziel vertraut werden, noch angibt, dass einer oder beiden der Anwendung und des Ziels nicht vertraut werden (750, NO), Zerlegen der Reputationsinformation in eine der Kategorien einer Gruppe, aufweisend tendenziell gut und unbekannt, wobei tendenziell gut bedeutet, dass die Anwendung und das Ziel von anderen als eine Anwendung und ein Ziel verifiziert wurden, welche kein Sicherheitsrisiko darstellen, jedoch noch nicht bekannt ist, ob ihnen zu vertrauen ist, und Benachrichtigen (770) eines Benutzers des Endpunkt-Systems, dass eine Anwendung versucht hat, die Datei zu dem Ziel zu übertragen;
falls die Reputationsinformation tendenziell gut ist, nicht Ergreifen einer zusätzlichen Maßnahme über das Benachrichtigen (770) des Benutzers hinaus, dass die Anwendung versucht hat, die Datei zu dem Ziel zu übertragen; und
falls die Reputationsinformation unbekannt ist, Auffordern eines Benutzers des Endpunkt-Systems, explizit zu erlauben oder zu blockieren, dass die Anwendung die Datei zu dem Ziel überträgt.

5. Ein computerlesbares Speichermedium, welches Anweisungen speichert, welche, wenn sie auf einem Prozessor ausgeführt werden, einen Vorgang zum Verhindern von Datenverlust bei einem Computersystem ausführen, aufweisend:
Identifizieren einer ersten Anwendung, welche anfordert, auf eine Datei zuzugreifen, welche durch das Computersystem zugänglich ist;
Bestimmen einer Reputation, welche mit der ersten Anwendung verknüpft ist;
falls die Reputationsinformation angibt, dass der ersten Anwendung vertraut wird, Erlauben der ersten Anwendung, auf die Datei zuzugreifen, einer Datenschutzprävention, DLP, Richtlinie unterzogen;
falls die Reputationsinformation angibt, dass der ersten Anwendung nicht vertraut wird, Blockieren des Zugriffs auf die Datei;
falls die Reputationsinformation weder angibt, dass der ersten Anwendung vertraut wird noch nicht vertraut wird, Zerlegen der Reputationsinformation in eine der Kategorien einer Gruppe, aufweisend tendenziell gut und unbekannt, wobei tendenziell gut bedeutet, dass die Anwendung von anderen als eine Anwendung verifiziert wurde, welche kein Sicherheitsrisiko darstellt, jedoch noch nicht bekannt ist, ob ihr zu vertrauen ist;
falls die Reputationsinformation tendenziell gut ist, Benachrichtigen eines Benutzers, dass die erste Anwendung angefordert hat, auf eine Datei zuzugreifen; und
falls die Reputationsinformation unbekannt ist, Auffordern eines Benutzers, den Zugriff auf die Datei manuell zu erlauben oder zu blockieren.

6. Ein computerlesbares Speichermedium, welches Anweisungen speichert, welche, wenn sie auf einem Prozessor ausgeführt werden, einen Vorgang (500) zum Verhindern von Datenverlust bei einem Endpunkt-Computersystem ausführen, wobei der Vorgang (500) mittels eines DLP Endpunkt-Systems ausgeführt wird, welches auf dem Endpunkt-Computersystem betrieben wird, und aufweist:
Detektieren (510) eines Prozessstarts auf dem Computersystem;
Abfragen (520) eines Reputationsdiensts nach einer Reputationsinformation des gestarteten Prozesses;
falls die Reputationsinformation angibt, dass dem gestarteten Prozess vertraut wird (530, YES), Unterziehen weiterer Vorgänge des gestarteten Prozesses einer DLP Richtlinie, welche mit den Daten verknüpft ist, welche der Vorgang versucht, von einem Dateisystem zu erhalten oder aus dem Endpunkt-Computersystem zu übertragen;
falls die Reputationsinformation angibt, dass dem gestarteten Prozess nicht vertraut wird (530, NO; 540, YES), Blockieren (550) einer Prozessausführung des gestarteten Prozesses;
falls die Reputationsinformation weder angibt, dass dem gestarteten Prozess vertraut wird noch nicht vertraut wird (540, NO), Zerlegen der Reputationsinformation in eine der Kategorien aus einer Gruppe, aufweisend tendenziell gut und unbekannt, wobei tendenziell gut bedeutet, dass der gestartete Prozess von anderen als ein Prozess verifiziert wurde, welcher kein Sicherheitsrisiko darstellt, jedoch noch nicht bekannt ist, ob ihm zu vertrauen ist, und Benachrichtigen (560) eines Benutzers des Endpunkt-Systems, dass ein Prozess gestartet wurde;
falls die Reputationsinformation tendenziell gut ist, nicht Ergreifen einer zusätzlichen Maßnahme über das Benachrichtigen (560) des Benutzers hinaus, dass der Prozess gestartet wurde; und
falls die Reputationsinformation unbekannt ist, Auffordern eines Benutzers des Endpunkt-Systems, die Prozessausführung explizit zu erlauben oder zu blockieren.

7. Ein computerlesbares Speichermedium, welches Anweisungen speichert, welche, wenn sie auf einem Prozessor ausgeführt werden, einen Vorgang (600) zum Verhindern von Datenverlust bei einem Endpunkt-Computersystem ausführen, wobei der Vorgang (600) mittels eines DLP Endpunkt-Systems ausgeführt wird, welcher auf dem Endpunkt-Computersystem betrieben wird, und aufweist:
Detektieren (610), dass eine Anwendung auf dem Computersystem einen neuen Netzwerkvorgang erzeugt hat;
Abfragen (620) eines Reputationsdiensts nach einer Reputationsinformation über das Netzwerkverbindungsziel;
falls die Reputationsinformation angibt, dass dem Ziel vertraut wird (630, YES), Erlauben der Anwendung, Netzwerkkommunikationen mit dem Ziel auszuführen;
falls die Reputationsinformation angibt, dass dem Ziel nicht vertraut wird (630, NO; 640, YES), Blockieren (650) der Erzeugung der Netzwerkverbindung;
falls die Reputationsinformation weder angibt, dass dem Ziel vertraut wird noch nicht vertraut wird (640, NO), Zerlegen der Reputationsinformation in eine der Kategorien einer Gruppe, aufweisend tendenziell gut und unbekannt, wobei tendenziell gut bedeutet, dass das Netzwerkverbindungsziel von anderen als ein Ziel verifiziert wurde, welches kein Sicherheitsrisiko darstellt, jedoch noch nicht bekannt ist, ob ihm zu vertrauen ist, und Benachrichtigen (660) eines Benutzers des Endpunkt-Systems, dass eine Anwendung versucht hat, eine Netzwerkkommunikation mit dem Ziel herzustellen;
falls die Reputationsinformation tendenziell gut ist, nicht Ergreifen einer zusätzlichen Maßnahme über das Benachrichtigen (660) des Benutzers hinaus, dass die Anwendung versucht hat, eine Netzwerkkommunikation mit dem Ziel herzustellen; und
falls die Reputationsinformation unbekannt ist, Auffordern eines Benutzers des Endpunktsystems, explizit zu erlauben oder zu blockieren, dass die Anwendung die Netzwerkverbindung herstellt.

8. Ein computerlesbares Speichermedium, welches Anweisungen speichert, welche, wenn sie auf einem Prozessor ausgeführt werden, einen Vorgang (700) zum Verhindern von Datenverlust bei einem Endpunkt-Computersystem ausführen, wobei der Vorgang (700) mittels eines DLP Endpunkt-Systems ausgeführt wird, welcher auf dem Endpunkt-Computersystem betrieben wird, und aufweist:
Detektieren (710) von Dateivorgängen mittels einer Anwendung auf dem Computersystem, welche versucht, eine Datei über ein Netzwerk zu übertragen;
Abfragen (720) eines Reputationsdiensts nach einer Reputationsinformation über die Anwendung und das Ziel der Datei;
falls die Reputationsinformation angibt, dass sowohl der Anwendung als auch dem Ziel vertraut werden (730, YES), Anwenden (740) einer DLP Richtlinie spezifisch auf die Datei, welche die Anwendung versucht, zu dem Ziel zusenden;
falls die Reputationsinformation angibt, dass einer oder beiden der Anwendung und dem Ziel nicht vertraut werden (730, NO; 750, YES), Blockieren (760) der Dateivorgänge;
falls die Reputationsinformation weder angibt, dass der Anwendung und dem Ziel vertraut werden, noch angibt, dass einer oder beiden der Anwendung und des Ziels nicht vertraut werden (750, NO), Zerlegen der Reputationsinformation in eine der Kategorien aus einer Gruppe, aufweisend tendenziell gut und unbekannt, wobei tendenziell gut bedeutet, dass die Anwendung und das Ziel von anderen als eine Anwendung und ein Ziel verifiziert wurden, welche kein Sicherheitsrisiko darstellen, jedoch noch nicht bekannt ist, ob ihnen zu vertrauen ist, und Benachrichtigen (770) eines Benutzers des Endpunkt-Systems, dass eine Anwendung versucht hat, die Datei zu dem Ziel zu übertragen;
falls die Reputationsinformation tendenziell gut ist, nicht Ergreifen einer zusätzlichen Maßnahme über das Benachrichtigen (770) des Benutzers hinaus, dass die Anwendung versucht hat, die Datei zu dem Ziel zu übertragen; und
falls die Reputationsinformation unbekannt ist, Auffordern eines Benutzers des Endpunkt-Systems, explizit zu erlauben oder zu blockieren, dass die Anwendung die Datei zu dem Ziel überträgt.

9. Ein System aufweisend:
einen Prozessor; und
einen Speicher, welcher einen Code speichert, welcher, wenn er auf dem Prozessor ausgeführt wird, einen Vorgang zum Verhindern von Datenverlust bei einem Computersystem ausführt, aufweisend:
Identifizieren einer ersten Anwendung, welche anfordert, auf eine Datei zuzugreifen, welche durch das Computersystem zugänglich ist;
Bestimmen einer Reputation, welche mit der ersten Anwendung verknüpft ist;
falls die Reputationsinformation angibt, dass der ersten Anwendung vertraut wird, Erlauben der ersten Anwendung, auf die Datei zuzugreifen, einer Datenschutzprävention, DLP, Richtlinie unterzogen;
falls die Reputationsinformation angibt, dass der ersten Anwendung nicht vertraut wird, Blockieren des Zugriffs auf die Datei;
falls die Reputationsinformation weder angibt, dass der ersten Anwendung vertraut wird noch nicht vertraut wird, Zerlegen der Reputationsinformation in eine der Kategorien einer Gruppe, aufweisend tendenziell gut und unbekannt, wobei tendenziell gut bedeutet, dass die Anwendung von anderen als eine Anwendung verifiziert wurde, welche kein Sicherheitsrisiko darstellt, jedoch noch nicht bekannt ist, ob ihr zu vertrauen ist;
falls die Reputationsinformation tendenziell gut ist, Benachrichtigen eines Benutzers, dass die erste Anwendung angefordert hat, auf eine Datei zuzugreifen; und
falls die Reputationsinformation unbekannt ist, Auffordern eines Benutzers, den Zugriff auf die Datei manuell zu erlauben oder zu blockieren.

10. Ein Endpunkt-Computersystem aufweisend:
einen Prozessor; und
einen Speicher, welcher einen Code speichert, welcher, wenn er auf dem Prozessor ausgeführt wird, einen Vorgang (500) zum Verhindern von Datenverlust bei einem Endpunkt-Computersystem ausführt, wobei der Vorgang (500) mittels eines DLP Endpunkt-Systems ausgeführt wird, welches auf dem Endpunkt-Computersystem betrieben wird, und aufweist:
Detektieren (510) eines Prozessstarts auf dem Computersystem;
Abfragen (520) eines Reputationsdiensts nach einer Reputationsinformation des gestarteten Prozesses;
falls die Reputationsinformation angibt, dass dem gestarteten Prozess vertraut wird (530, YES), Unterziehen der weiteren Vorgänge des gestarteten Prozesses einer DLP Richtlinie, welche mit den Daten verknüpft ist, welche der Vorgang versucht, von einem Dateisystem zu erhalten oder aus dem Endpunkt-Computersystem zu übertragen;
falls die Reputationsinformation angibt, dass dem gestarteten Prozess nicht vertraut wird (530, NO; 540, YES), Blockieren (550) der Prozessausführung des gestarteten Prozesses;
falls die Reputationsinformation weder angibt, dass dem gestarteten Prozess vertraut wird noch nicht vertraut wird (540, NO), Zerlegen der Reputationsinformation in eine der Kategorien einer Gruppe, aufweisend tendenziell gut und unbekannt, wobei tendenziell gut bedeutet, dass der gestartete Prozess von anderen als ein Prozess verifiziert wurde, welcher kein Sicherheitsrisiko darstellt, jedoch noch nicht bekannt ist, ob ihm zu vertrauen ist, und Benachrichtigen (560) eines Benutzers des Endpunkts-Systems, dass ein Prozess gestartet wurde;
falls die Reputationsinformation tendenziell gut ist, nicht Ergreifen einer zusätzlichen Maßnahme über das Benachrichtigen (560) des Benutzers hinaus, dass der Prozess gestartet wurde; und
falls die Reputationsinformation unbekannt ist, Auffordern eines Benutzers des Endpunkt-Systems, die Prozessausführung explizit zu erlauben oder zu blockieren.

11. Ein Endpunkt-Computersystem aufweisend:
einen Prozessor; und
einen Speicher, welcher einen Code speichert, welcher, wenn er auf dem Prozessor ausgeführt wird, einen Vorgang (600) zum Verhindern von Datenverlust bei dem Endpunkt-Computersystem ausführt, wobei der Vorgang (600) mittels eines DLP Endpunkt-Systems ausgeführt wird, welcher auf dem Endpunkt-Computersystem betrieben wird, und aufweist:
Detektieren (610), dass eine Anwendung auf dem Computersystem einen neuen Netzwerkvorgang erzeugt hat;
Abfragen (620) eines Reputationsdiensts nach einer Reputationsinformation über das Netzwerkverbindungsziel;
falls die Reputationsinformation angibt, dass dem Ziel vertraut wird (630, YES), Erlauben der Anwendung, Netzwerkkommunikationen mit dem Ziel auszuführen;
falls die Reputationsinformation angibt, dass dem Ziel nicht vertraut wird (630, NO; 640, YES), Blockieren (650) der Erzeugung der Netzwerkverbindung;
falls die Reputationsinformation weder angibt, dass dem Ziel vertraut wird noch nicht vertraut wird (640, NO), Zerlegen der Reputationsinformation in eine der Kategorien einer Gruppe, aufweisend tendenziell gut und unbekannt, wobei tendenziell gut bedeutet, dass das Netzwerkverbindungsziel von anderen als ein Ziel verifiziert wurde, welches kein Sicherheitsrisiko darstellt, jedoch noch nicht bekannt ist, ob ihm zu vertrauen ist, und Benachrichtigen (660) eines Benutzers des Endpunkt-Systems, dass eine Anwendung versucht hat, eine Netzwerkkommunikation mit dem Ziel herzustellen;
falls die Reputationsinformation tendenziell gut ist, nicht Ergreifen einer zusätzlichen Maßnahme über das Benachrichtigen (660) des Benutzers hinaus, dass die Anwendung versucht hat, eine Netzwerkkommunikation mit dem Ziel herzustellen; und
falls die Reputationsinformation unbekannt ist, Auffordern eines Benutzers des Endpunktsystems, explizit zu erlauben oder zu blockieren, dass die Anwendung die Netzwerkverbindung herstellt.

12. Ein Endpunkt-Computersystem aufweisend:
einen Prozessor; und
einen Speicher, welcher einen Code speichert, welcher, wenn er auf dem Prozessor ausgeführt wird, einen Vorgang (700) zum Verhindern von Datenverlust bei dem Endpunkt-Computersystem ausführt, wobei der Vorgang (700) mittels eines DLP Endpunkt-Systems ausgeführt wird, welches auf dem Endpunkt-Computersystem betrieben wird, und aufweist:
Detektieren (710) von Dateivorgängen mittels einer Anwendung auf dem Computersystem, welche versucht, eine Datei über ein Netzwerk zu übertragen;
Abfragen (720) eines Reputationsdienstes nach einer Reputationsinformation über die Anwendung und das Ziel der Datei;
falls die Reputationsinformation angibt, dass sowohl der Anwendung als auch dem Ziel vertraut werden (730, YES), Anwenden (740) einer DLP Richtlinie spezifisch auf die Datei, welche die Anwendung versucht, zu dem Ziel zu senden;
falls die Reputationsinformation angibt, dass einer oder beiden von der Anwendung und dem Ziel nicht vertraut werden (730, NO; 750, YES), Blockieren (760) der Dateivorgänge;
falls die Reputationsinformation weder angibt, dass der Anwendung und dem Ziel vertraut werden, noch angibt, dass einer oder beiden der Anwendung und des Ziels nicht vertraut werden (750, NO), Zerlegen der Reputationsinformation in eine der Kategorien einer Gruppe, aufweisend tendenziell gut und unbekannt, wobei tendenziell gut bedeutet, dass die Anwendung und das Ziel von anderen als eine Anwendung und ein Ziel verifiziert wurden, welche kein Sicherheitsrisiko darstellen, jedoch noch nicht bekannt ist, ob ihnen zu vertrauen ist, und Benachrichtigen (770) eines Benutzers des Endpunkt-Systems, dass eine Anwendung versucht hat, die Datei zu dem Ziel zu übertragen;
falls die Reputationsinformation tendenziell gut ist, nicht Ergreifen einer zusätzlichen Maßnahme über das Benachrichtigen (770) des Benutzers hinaus, dass die Anwendung versucht hat, die Datei zu dem Ziel zu übertragen; und
falls die Reputationsinformation unbekannt ist, Auffordern eines Benutzers des Endpunkt-Systems, explizit zu erlauben oder zu blockieren, dass die Anwendung die Datei zu dem Ziel überträgt.

## Revendications

1. Procédé pour empêcher la perte de données au niveau d'un système informatique, comprenant :
l'identification d'une première application demandant d'accéder à un fichier accessible par l'intermédiaire du système informatique ;
la détermination d'une réputation associée à la première application ;
si les informations de réputation indiquent que la première application est fiable, autoriser la première application à accéder au fichier, sous réserve d'une politique de prévention de la perte de données, DLP ;
si les informations de réputation indiquent que la première application est non fiable, bloquer l'accès au fichier ;
si les informations de réputation n'indiquent ni que la première application est fiable ni non fiable, décomposer les informations de réputation en une des catégories de groupe comprenant à tendance bonnes et inconnues, dans lequel à tendance bonnes signifie que l'application a été vérifiée par d'autres comme une application qui ne présente pas de risque pour la sécurité mais n'a pas encore été avérée fiable ;
si les informations de réputation sont à tendance bonnes, notifier à un utilisateur que la première application a demandé d'accéder à un fichier ; et
si les informations de réputation sont inconnues, demander à un utilisateur d'autoriser ou de bloquer manuellement l'accès au fichier.

2. Procédé (500) pour empêcher la perte de données au niveau d'un système informatique de point d'extrémité, dans lequel le procédé est exécuté par un système de point d'extrémité DLP fonctionnant sur le système informatique de point d'extrémité et comprend :
la détection (510) d'un lancement de processus sur le système informatique ;
l'interrogation (520) d'un service de réputation pour des informations de réputation du processus lancé ;
si les informations de réputation indiquent que le processus lancé est fiable (530, OUI), soumettre d'autres opérations du processus lancé à une politique DLP associée aux données que le processus tente d'obtenir à partir d'un système de fichier ou de transmettre hors du système informatique de point d'extrémité ;
si les informations de réputation indiquent que le processus lancé est non fiable (530, NON ; 540, OUI), bloquer (550) l'exécution de processus du processus lancé ;
si les informations de réputation n'indiquent ni que le processus lancé est fiable ni non fiable (540, NON), décomposer les informations de réputation en une des catégories de groupe comprenant à tendance bonnes et inconnues, dans lequel à tendance bonnes signifie que le processus lancé a été vérifié par d'autres comme un processus qui ne présente pas de risque pour la sécurité mais n'a pas encore été avéré fiable, et notifier (560) à un utilisateur du système de point d'extrémité qu'un processus a été lancé ;
si les informations de réputation sont à tendance bonnes, n'entreprendre aucune action additionnelle au-delà de la notification (560) à l'utilisateur que le processus a été lancé ; et
si les informations de réputation sont inconnues, demander à un utilisateur du système de point d'extrémité d'autoriser ou de bloquer explicitement l'exécution de processus.

3. Procédé (600) pour empêcher la perte de données au niveau d'un système informatique de point d'extrémité, dans lequel le procédé est exécuté par un système de point d'extrémité DLP fonctionnant sur le système informatique de point d'extrémité et comprend :
la détection (610) qu'une application sur le système informatique a créé une nouvelle opération de réseau ;
l'interrogation (620) d'un service de réputation pour des informations de réputation concernant la destination de connexion réseau ;
si les informations de réputation indiquent que la destination est fiable (630, OUI), autoriser l'application à effectuer des communications réseau avec la destination ;
si les informations de réputation indiquent que la destination est non fiable (630, NON ; 640, OUI), bloquer (650) la création de la connexion réseau ;
si les informations de réputation n'indiquent ni que la destination est fiable ni non fiable (640, NON), décomposer les informations de réputation en une des catégories de groupe comprenant à tendance bonnes et inconnues, dans lequel à tendance bonnes signifie que la destination de connexion réseau a été vérifiée par d'autres comme une destination qui ne présente pas de risque pour la sécurité mais n'a pas encore été avérée fiable, et notifier (660) à un utilisateur du système de point d'extrémité qu'une application a tenté de créer une communication réseau vers la destination ;
si les informations de réputation sont à tendance bonnes, n'entreprendre aucune action additionnelle au-delà de la notification (660) à l'utilisateur que l'application a tenté de créer une communication réseau vers la destination ; et
si les informations de réputation sont inconnues, demander à un utilisateur du système de point d'extrémité d'autoriser ou de bloquer explicitement l'établissement par l'application de la connexion réseau.

4. Procédé (700) pour empêcher la perte de données au niveau d'un système informatique de point d'extrémité, dans lequel le procédé est exécuté par un système de point d'extrémité DLP fonctionnant sur le système informatique de point d'extrémité et comprend :
la détection (710) d'opérations de fichier par une application sur le système informatique tentant de transmettre un fichier sur un réseau ;
l'interrogation (720) d'un service de réputation pour des informations de réputation concernant l'application et la destination du fichier ;
si les informations de réputation indiquent qu'à la fois l'application et la destination sont fiables (730, OUI), appliquer (740) une politique DLP spécifique au fichier que l'application tente d'envoyer à la destination ;
si les informations de réputation indiquent qu'une ou les deux de l'application et de la destination sont non fiables (730, NON ; 750, OUI), bloquer (760) des opérations de fichier ;
si les informations de réputation n'indiquent ni l'application et la destination sont fiables ni n'indiquent qu'une ou les deux de l'application et de la destination sont non fiables (750, NON), décomposer les informations de réputation en une des catégories de groupe comprenant à tendance bonnes et inconnues, dans lequel à tendance bonnes signifie que l'application et la destination ont été vérifiées par d'autres comme une application et une destination qui ne présentent pas de risque pour la sécurité mais n'ont pas encore été avérées fiables, et notifier (770) à un utilisateur du système de point d'extrémité qu'une application a tenté de transmettre le fichier à la destination ;
si les informations de réputation sont à tendance bonnes, n'entreprendre aucune action additionnelle au-delà de la notification (770) à l'utilisateur que l'application a tenté de transmettre le fichier à la destination ; et
si les informations de réputation sont inconnues, demander à un utilisateur du système de point d'extrémité d'autoriser ou de bloquer explicitement la transmission par l'application du fichier à la destination.

5. Support de stockage lisible par ordinateur stockant des instructions, qui, lorsqu'elles sont exécutées sur un processeur, effectuent une opération pour empêcher la perte de données au niveau d'un système informatique comprenant :
l'identification d'une première application demandant d'accéder à un fichier accessible par l'intermédiaire du système informatique ;
la détermination d'une réputation associée à la première application ;
si les informations de réputation indiquent que la première application est fiable, autoriser la première application à accéder au fichier, sous réserve d'une politique de prévention de la perte de données, DLP ;
si les informations de réputation indiquent que la première application est non fiable, bloquer l'accès au fichier ;
si les informations de réputation n'indiquent ni que la première application est fiable ni non fiable, décomposer les informations de réputation en une des catégories de groupe comprenant à tendance bonnes et inconnues, dans lequel à tendance bonnes signifie que l'application a été vérifiée par d'autres comme une application qui ne présente pas de risque pour la sécurité mais n'a pas encore été avérée fiable ;
si les informations de réputation sont à tendance bonnes, notifier à un utilisateur que la première application a demandé d'accéder à un fichier ; et
si les informations de réputation sont inconnues, demander à un utilisateur d'autoriser ou de bloquer manuellement l'accès au fichier.

6. Support de stockage lisible par ordinateur stockant des instructions, qui, lorsqu'elles sont exécutées sur un processeur, effectuent une opération (500) pour empêcher la perte de données au niveau d'un système informatique de point d'extrémité, dans lequel l'opération (500) est exécutée par un système de point d'extrémité DLP fonctionnant sur le système informatique de point d'extrémité et comprend :
la détection (510) d'un lancement de processus sur le système informatique ;
l'interrogation (520) d'un service de réputation pour des informations de réputation du processus lancé ;
si les informations de réputation indiquent que le processus lancé est fiable (530, OUI), soumettre d'autres opérations du processus lancé à une politique DLP associée aux données que le processus tente d'obtenir à partir d'un système de fichier ou de transmettre hors du système informatique de point d'extrémité ;
si les informations de réputation indiquent que le processus lancé est non fiable (530, NON ; 540, OUI), bloquer (550) l'exécution de processus du processus lancé ;
si les informations de réputation n'indiquent ni que le processus lancé est fiable ni non fiable (540, NON), décomposer les informations de réputation en une des catégories de groupe comprenant à tendance bonnes et inconnues, dans lequel à tendance bonnes signifie que le processus lancé a été vérifié par d'autres comme un processus qui ne présente pas de risque pour la sécurité mais n'a pas encore été avéré fiable, et notifier (560) à un utilisateur du système de point d'extrémité qu'un processus a été lancé ;
si les informations de réputation sont à tendance bonnes, n'entreprendre aucune action additionnelle au-delà de la notification (560) à l'utilisateur que le processus a été lancé ; et
si les informations de réputation sont inconnues, demander à un utilisateur du système de point d'extrémité d'autoriser ou de bloquer explicitement l'exécution de processus.

7. Support de stockage lisible par ordinateur stockant des instructions, qui, lorsqu'elles sont exécutées sur un processeur, effectuent une opération (600) pour empêcher la perte de données au niveau d'un système informatique de point d'extrémité, dans lequel l'opération (600) est exécutée par un système de point d'extrémité DLP fonctionnant sur le système informatique de point d'extrémité et comprend :
la détection (610) qu'une application sur le système informatique a créé une nouvelle opération de réseau ;
l'interrogation (620) d'un service de réputation pour des informations de réputation concernant la destination de connexion réseau ;
si les informations de réputation indiquent que la destination est fiable (630, OUI), autoriser l'application à effectuer des communications réseau avec la destination ;
si les informations de réputation indiquent que la destination est non fiable (630, NON ; 640, OUI), bloquer (650) la création de la connexion réseau ;
si les informations de réputation n'indiquent ni que la destination est fiable ni non fiable (640, NON), décomposer les informations de réputation en une des catégories de groupe comprenant à tendance bonnes et inconnues, dans lequel à tendance bonnes signifie que la destination de connexion réseau a été vérifiée par d'autres comme une destination qui ne présente pas de risque pour la sécurité mais n'a pas encore été avérée fiable, et notifier (660) à un utilisateur du système de point d'extrémité qu'une application a tenté de créer une communication réseau vers la destination ;
si les informations de réputation sont à tendance bonnes, n'entreprendre aucune action additionnelle au-delà de la notification (660) à l'utilisateur que l'application a tenté de créer une communication réseau vers la destination ; et
si les informations de réputation sont inconnues, demander à un utilisateur du système de point d'extrémité d'autoriser ou de bloquer explicitement l'établissement par l'application de la connexion réseau.

8. Support de stockage lisible par ordinateur stockant des instructions, qui, lorsqu'elles sont exécutées sur un processeur, effectuent une opération (700) pour empêcher la perte de données au niveau d'un système informatique de point d'extrémité, dans lequel l'opération (700) est exécutée par un système de point d'extrémité DLP fonctionnant sur le système informatique de point d'extrémité et comprend :
la détection (710) d'opérations de fichier par une application sur le système informatique tentant de transmettre un fichier sur un réseau ;
l'interrogation (720) d'un service de réputation pour des informations de réputation concernant l'application et la destination du fichier ;
si les informations de réputation indiquent qu'à la fois l'application et la destination sont fiables (730, OUI), appliquer (740) une politique DLP spécifique au fichier que l'application tente d'envoyer à la destination ;
si les informations de réputation indiquent qu'une ou les deux de l'application et de la destination sont non fiables (730, NON ; 750, OUI), bloquer (760) des opérations de fichier ;
si les informations de réputation n'indiquent ni que l'application et la destination sont fiables ni n'indiquent qu'une ou les deux de l'application et de la destination sont non fiables (750, NON), décomposer les informations de réputation en une des catégories de groupe comprenant à tendance bonnes et inconnues, dans lequel à tendance bonnes signifie que l'application et la destination ont été vérifiées par d'autres comme une application et une destination qui ne présentent pas de risque pour la sécurité mais n'ont pas encore été avérées fiables, et notifier (770) à un utilisateur du système de point d'extrémité qu'une application a tenté de transmettre le fichier à la destination ;
si les informations de réputation sont à tendance bonnes, n'entreprendre aucune action additionnelle au-delà de la notification (770) à l'utilisateur que l'application a tenté de transmettre le fichier à la destination ; et
si les informations de réputation sont inconnues, demander à un utilisateur du système de point d'extrémité d'autoriser ou de bloquer explicitement la transmission par l'application du fichier à la destination.

9. Système, comprenant :
un processeur ; et
une mémoire stockant un code, qui, lorsqu'il est exécuté sur le processeur, effectue une opération pour empêcher la perte de données au niveau d'un système informatique comprenant :
l'identification d'une première application demandant d'accéder à un fichier accessible par l'intermédiaire du système informatique ;
la détermination d'une réputation associée à la première application ;
si les informations de réputation indiquent que la première application est fiable, autoriser la première application à accéder au fichier, sous réserve d'une politique de prévention de la perte de données, DLP ;
si les informations de réputation indiquent que la première application est non fiable, bloquer l'accès au fichier ;
si les informations de réputation n'indiquent ni que la première application est fiable ni non fiable, décomposer les informations de réputation en une des catégories de groupe comprenant à tendance bonnes et inconnues, dans lequel à tendance bonnes signifie que l'application a été vérifiée par d'autres comme une application qui ne présente pas de risque pour la sécurité mais n'a pas encore été avérée fiable ;
si les informations de réputation sont à tendance bonnes, notifier à un utilisateur que la première application a demandé d'accéder à un fichier ; et
si les informations de réputation sont inconnues, demander à un utilisateur d'autoriser ou de bloquer manuellement l'accès au fichier.

10. Système informatique de point d'extrémité, comprenant :
un processeur ; et
une mémoire stockant un code, qui, lorsqu'il est exécuté sur le processeur, effectue une opération (500) pour empêcher la perte de données au niveau du système informatique de point d'extrémité, dans lequel l'opération (500) est exécutée par un système de point d'extrémité DLP fonctionnant sur le système informatique de point d'extrémité et comprend :
la détection (510) d'un lancement de processus sur le système informatique ;
l'interrogation (520) d'un service de réputation pour des informations de réputation du processus lancé ;
si les informations de réputation indiquent que le processus lancé est fiable (530, OUI), soumettre d'autres opérations du processus lancé à une politique DLP associée aux données que le processus tente d'obtenir à partir d'un système de fichier ou de transmettre hors du système informatique de point d'extrémité ;
si les informations de réputation indiquent que le processus lancé est non fiable (530, NON ; 540, OUI), bloquer (550) l'exécution de processus du processus lancé ;
si les informations de réputation n'indiquent ni que le processus lancé est fiable ni non fiable (540, NON), décomposer les informations de réputation en une des catégories de groupe comprenant à tendance bonnes et inconnues, dans lequel à tendance bonnes signifie que le processus lancé a été vérifié par d'autres comme un processus qui ne présente pas de risque pour la sécurité mais n'a pas encore été avéré fiable, et notifier (560) à un utilisateur du système de point d'extrémité qu'un processus a été lancé ;
si les informations de réputation sont à tendance bonnes, n'entreprendre aucune action additionnelle au-delà de la notification (560) à l'utilisateur que le processus a été lancé ; et
si les informations de réputation sont inconnues, demander à un utilisateur du système de point d'extrémité d'autoriser ou de bloquer explicitement l'exécution de processus.

11. Système informatique de point d'extrémité, comprenant :
un processeur ; et
une mémoire stockant un code, qui, lorsqu'il est exécuté sur le processeur, effectue une opération (600) pour empêcher la perte de données au niveau du système informatique de point d'extrémité, dans lequel l'opération (600) est exécutée par un système de point d'extrémité DLP fonctionnant sur le système informatique de point d'extrémité et comprend :
la détection (610) qu'une application sur le système informatique a créé une nouvelle opération de réseau ;
l'interrogation (620) d'un service de réputation pour des informations de réputation concernant la destination de connexion réseau ;
si les informations de réputation indiquent que la destination est fiable (630, OUI), autoriser l'application à effectuer des communications réseau avec la destination ;
si les informations de réputation indiquent que la destination est non fiable (630, NON ; 640, OUI), bloquer (650) la création de la connexion réseau ;
si les informations de réputation n'indiquent ni que la destination est fiable ni non fiable (640, NON), décomposer les informations de réputation en une des catégories de groupe comprenant à tendance bonnes et inconnues, dans lequel à tendance bonnes signifie que la destination de connexion réseau a été vérifiée par d'autres comme une destination qui ne présente pas de risque pour la sécurité mais n'a pas encore été avérée fiable, et notifier (660) à un utilisateur du système de point d'extrémité qu'une application a tenté de créer une communication réseau vers la destination ;
si les informations de réputation sont à tendance bonnes, n'entreprendre aucune action additionnelle au-delà de la notification (660) à l'utilisateur que l'application a tenté de créer une communication réseau vers la destination ; et
si les informations de réputation sont inconnues, demander à un utilisateur du système de point d'extrémité d'autoriser ou de bloquer explicitement l'établissement par l'application de la connexion réseau.

12. Système informatique de point d'extrémité, comprenant :
un processeur ; et
une mémoire stockant un code, qui, lorsqu'il est exécuté sur le processeur, effectue une opération (700) pour empêcher la perte de données au niveau du système informatique de point d'extrémité, dans lequel l'opération (700) est exécutée par un système de point d'extrémité DLP fonctionnant sur le système informatique de point d'extrémité et comprend :
la détection (710) d'opérations de fichier par une application sur le système informatique tentant de transmettre un fichier sur un réseau ;
l'interrogation (720) d'un service de réputation pour des informations de réputation concernant l'application et la destination du fichier ;
si les informations de réputation indiquent qu'à la fois l'application et la destination sont fiables (730, OUI), appliquer (740) une politique DLP spécifique au fichier que l'application tente d'envoyer à la destination ;
si les informations de réputation indiquent qu'une ou les deux de l'application et de la destination sont non fiables (730, NON ; 750, OUI), bloquer (760) des opérations de fichier ;
si les informations de réputation n'indiquent ni que l'application et la destination sont fiables ni n'indiquent qu'une ou les deux de l'application et de la destination sont non fiables (750, NON), décomposer les informations de réputation en une des catégories de groupe comprenant à tendance bonnes et inconnues, dans lequel à tendance bonnes signifie que l'application et la destination ont été vérifiées par d'autres comme une application et une destination qui ne présentent pas de risque pour la sécurité mais n'ont pas encore été avérées fiables, et notifier (770) à un utilisateur du système de point d'extrémité qu'une application a tenté de transmettre le fichier à la destination ;
si les informations de réputation sont à tendance bonnes, n'entreprendre aucune action additionnelle au-delà de la notification (770) à l'utilisateur que l'application a tenté de transmettre le fichier à la destination ; et
si les informations de réputation sont inconnues, demander à un utilisateur du système de point d'extrémité d'autoriser ou de bloquer explicitement la transmission par l'application du fichier à la destination.
